# EUROPÄISCHE PATENTSCHRIFT

(11) **EP 0 564 905 B1**
(45) Veröffentlichungstag und Bekanntmachung des Hinweises auf die Patenterteilung: **04.10.1995**
(21) Anmeldenummer: 93104844.1
(22) Anmeldetag: 24.03.1993
(51) Int. Cl.: G01N 35/04, G01N 35/02

(54) **Transporteinrichtung für eine Analysenvorrichtung**
Transport device for an analyser
Dispositif de transport pour une appareil d'analyse

(30) Priorität: 06.04.1992 EP 92105902
(43) Veröffentlichungstag der Anmeldung: 13.10.1993
(73) Patentinhaber: F. HOFFMANN-LA ROCHE AG, 4002 Basel (CH)
(72) Erfinder: Koch, Bruno, CH-6330 Cham (CH); Schacher, Gottlieb, CH-6030 Ebikon (CH)
(74) Vertreter: Buntz, Gerhard

(56) Entgegenhaltungen:
- EP-A- 0 222 466
- US-A- 4 785 407

## Beschreibung

Die Erfindung betrifft eine Transporteinrichtung in einer Analysenvorrichtung zum Transport von Probenküvetten, die aus einem Probenbehälter und einem an die Behälteröffnung anschliessenden Flansch bestehen, zu mehreren Bearbeitungsstationen mit einem tellerförmigen, horizontal angeordneten Rotor mit einer senkrechten Aussenfläche, chemische und biochemische Analysen und speziell eine Transporteinrichtung zum Transport Von Küvetten zu mehreren Bearbeitungsstationen.

Automatische Analysenvorrichtungen arbeiten in der Regel nach dem Prinzip, dass die Analysenproben oder Teilmengen davon in Probenbehälter verbracht, anschliessend einer Reihe von Bearbeitungsschritten wie Zufügen (Pipettieren) von Reagenzien, Mischen, Inkubieren etc. unterworfen und dass entweder mehrmals während der Bearbeitung und/oder einmal am Ende der Bearbeitung Messungen der erfolgten Reaktionen vorgenommen werden. Dabei erfolgt der Ablauf üblicherweise entweder so, dass die Probenbehälter mit den Analysenproben in fester Reihenfolge auf einem Transportmittel angeordnet werden und verschiedene Bearbeitungsstationen durchlaufen oder dass bei der sog. Batch-Bearbeitung, wie sie bei den sog. Zentrifugalanalysengeräten üblich ist, alle auf einem Träger (Rotor) angeordneten Probenbehälter quasi gleichzeitig den Bearbeitungsschritten und den Messungen unterworfen werden. Nach diesen Prinzipien arbeitende Analysensysteme leisten gute Dienste in grossen Kliniken und Analysenzentren, in denen grosse Probenzahlen verarbeitet werden müssen.

Es hat sich aber angesichts der heutigen Vielfalt der möglichen Analysen und der medizinischen Anforderungen, vor allem im Bereich der klinischen Chemie herausgestellt, dass die bisher üblichen für den Durchsatz grosser Probenmengen geeigneten Analysenautomaten zu wenig flexibel sind, um auf einzelne Patienten bzw. Krankheitsbilder spezifisch zugeschnittene Analysenprofile (Full Random Access) zu erstellen und trotzdem eine grosse Zahl von Patientenproben zu bewältigen.

Eine Transporteinrichtung eines Analysensystems mit sehr einfach aufzusetzenden und zu entfernenden Probenträgern ist aus EP-A-222 466 bekannt. Diese einfache Handhabung ermöglicht im Prinzip grössere Flexibilität. Allerdings eignet sich diese Einrichtung nur für Probenträger von sog. Slide-Typs, nicht hingegen für herkömmliche Einzelküvetten.

Der Erfindung liegt daher die Aufgabe zugrunde, ein Analysensystem bereitzustellen, das diesen Anforderungen Rechnung trägt, indem eine grosse Zahl von Analysenproben mit grösster Flexibilität bezüglich des an der einzelnen Probe durchgeführten Analysenprofils verarbeitet werden können.

Erfindungsgemäss wird dies erreicht durch eine Vielzahl von Küvettenplätzen entlang der senkrechten Aussenfläche und federnde Halteelemente, welche die Flansche der Küvetten am Roter festhalten und bei einer radial gerichteten Bewegung der Küvetten freigeben derart, dass die Küvetten mit einer geradlinigen, horizontalen Bewegung abgenommen und aufgesetzt werden können.

Im folgenden wird anhand der beiliegenden Zeichnungen ein Ausführungsbeispiel der Erfindung beschrieben.

Es zeigen:
- Fig. 1: eine Transport- und Positioniereinrichtung in Form eines Rotormagazins in axonometrischer Darstellung, wobei die Halteblattfedern und die Küvetten nur teilweise angedeutet sind
- Fig. 2: einen vergrösserten axonometrischen Detailausschnitt aus Fig. 1
- Fig. 3: einen vergrösserten Vertikal-Schnitt gem. der Linie III-III in Fig. 1.

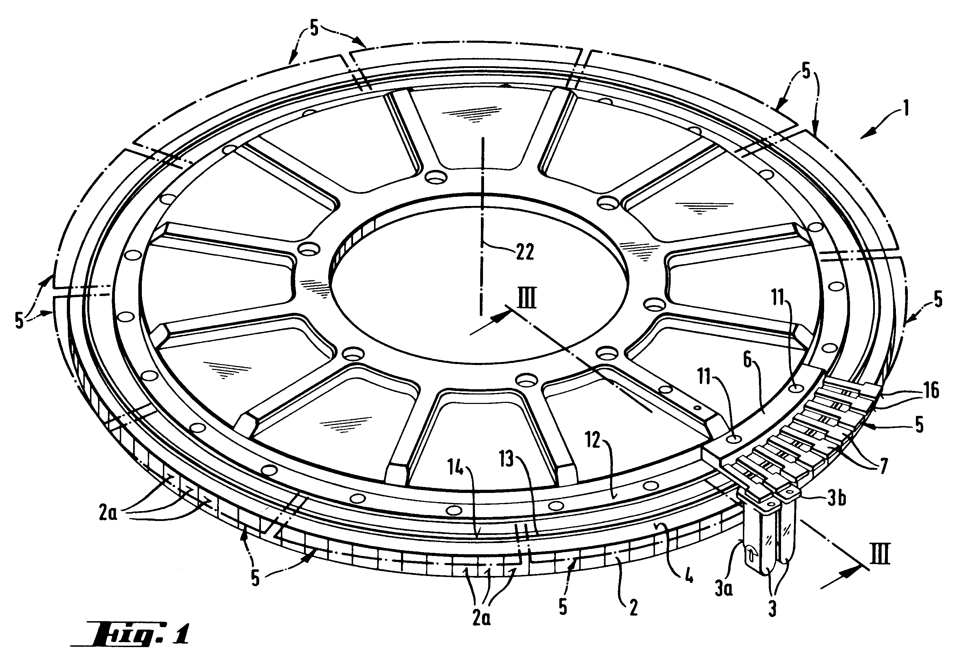

Das in Fig. 1 gezeigte tellerförmige Rotormagazin 1 dient als Transporteinrichtung für Küvetten 3.

Der Küvettenträger ist nicht genau kreisförmig. Seine Perpherie 2 ist ein Polygen. Seine Aussenfläche besteht aus 99 ebenen Facetten 2a. Die ebenen Flächen der Facetten 2a dienen dem besseren Anliegen der Küvetten, deren Aussenwand 3a gleichfalls eben ist. Jede Facette ist somit Anliegefläche für eine Küvette. Das Rotormagazin hat also Platz für maximal 99 Küvetten. Selbstverständlich kann die Zahl der Küvettenplätze am Rotormagazin bei einer anderen Ausführungsform grösser oder kleiner als 99 sein.

Das Rotormagazin besitzt ausserdem am äusseren Rand seiner Oberfläche eine schmale ebene Ringfläche 4, die sich senkrecht an die facettierte Aussenwand anschliesst. Die Ringfläche dient als Auflagetisch der beiden für einen an den Küvetten vorgesehenen Flansche 3b. In den Flanschen 3b ist oberseitig je eine Vertiefung 3c zum formschlüssigen Eingriff von Haltemitteln vorgesehen.

Durch das Anliegen an den Facetten und das Aufliegen der Flansche auf der Ringfläche ist die exakte Position der Küvetten in radialer und vertikaler Richtung festgelegt.

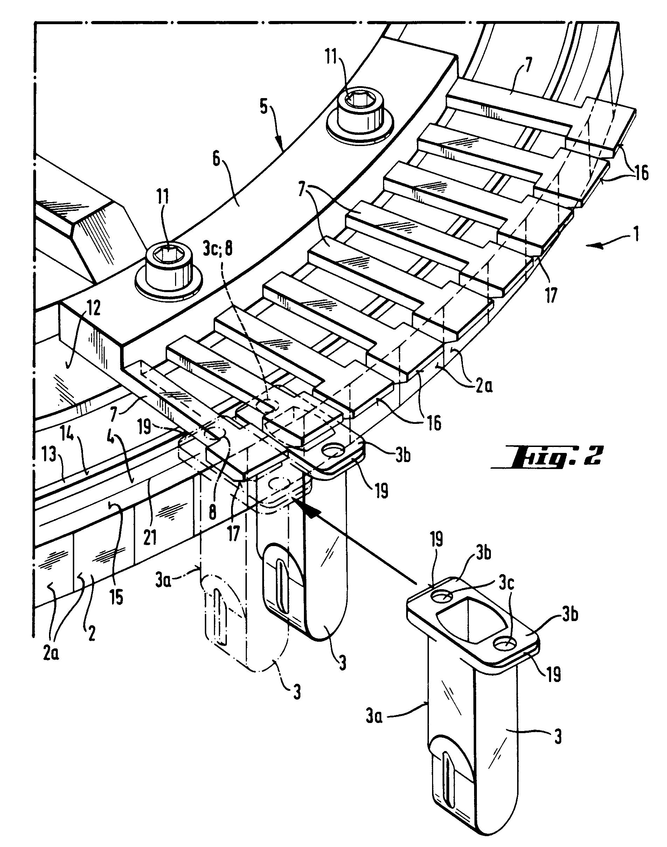

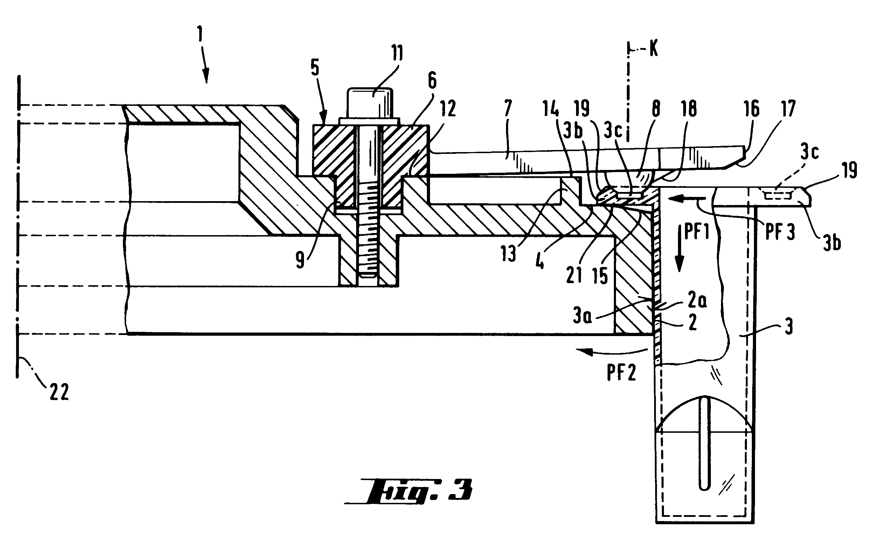

Zum Festhalten in dieser Position dienen elastische Haltemittel 5 die aus Fig. 2 und 3 genauer ersichtlich sind. Die Haltemittel 5 sind ebenfalls über die ganze Rotorperipherie verteilt. Aus Gründen der Vereinfachung und der Uebersichtlichkeit sind sie nur beispielhaft an einer Stelle des Rotors gezeigt. Sie bestehen aus radial gerichteten elastischen Zungen 7, die an ihrem radial inneren Ende am Träger befestigt sind und mit ihrem radial äusseren Ende auf dem Flansch 3b der Küvetten aufliegen.

Die Zungen 7 sind nicht einzeln am Träger befestigt, sondern jeweils neun Zungen sind an ihrem radial inneren Ende durch eine quer verlaufenden Leiste 6 zu einem kammförmigen Element zusammengefasst, das mittels Schrauben 11 auf einer Ringfläche 12 des Rotormagazins befestigt ist.

Am Auflagetisch 4 ist nach oben vorspringend eine Zungenanschlagleiste 13 angeformt, auf deren Auflagefläche 14 sich die Zunge 7 im Ruhezustand (wenn keine Küvette im Speicherplatz) abstützen kann.

Unterseitig an den Zungen 7 sind Nasen 8 angeformt, welche mit den Vertiefungen 3c der Küvettenflansche 3b zusammenwirken, derart, dass je eine Zunge 7 je einen Küvettenflansch 3b gegen den Auflagetisch 4, sowie die plane Längsseite 3a der Küvette 3 gegen eine Abflachung 2a im peripheren Bereich 2 des Rotormagazins 1 drückt und damit exakt positioniert.

An ihrem freien Ende sind die Zungen 7 zu einem Deckel verbreitert, der die Küvetten abdeckt, während sie sich auf dem Rotormagazin befinden, und so die Verdunstung weitgehend verhindert.

Zum Einführung des Küvettenflansches 3b einer Küvette 3, welche radial, horizontal auf dem peripheren Rand 2 des Rotormagazins 1 zugeführt wird besitzt der Auflagetisch 4 am äusseren Rotorrand 2 eine Fase 15 als Einlaufschräge für den Küvettenflansch 3b. Das freie Zungenende 16 besitzt eine Fase 17, wodurch das Einführen des mit einer entsprechenden Fase 19 versehenen Küvettenflansches 3b begünstigt wird.

Zur eigentlichen Auslenkung der Zunge 7 durch den Küvettenflansch 3b ist eine schräg ansteigende Auflauframpe 18 auf der Unterseite der Zunge 7 an der kugelabschnittförmigen Haltenase 8 vorgesehen.

Die Haltenase 8 ist derart dimensioniert, dass eine Restspannung der Zunge 7 erhalten bleibt, wenn die Haltenase 8 in die Vertiefung 3c des Küvettenflansches 3b eingerastet ist.

Ueber die Zunge 7, bzw. die Nase 8, wirken über die Ausnehmung 3c im Küvettenflansch 3b auf die Küvette 3 folgende drei Kräfte ein:
1. eine senkrecht nach unten wirkende Kraft gemäss Pfeil PF 1;
2. eine rotatorische Kraft in Richtung des Pfeiles PF 2, deren Drehpunkt 21 praktisch im Uebergangsbereich der Fase 15 zum horizontalen Bereich des Auflagetisches 4 liegt. Der Dreh- bzw. Schwenkpunkt 21 liegt dabei gegenüber der senkrechten Kraftwirklinie K der Zunge 7 nach innen in Richtung Rotordrehachse 22 versetzt.
3. eine radial waagrecht nach innen in Richtung Rotordrehachse 22 gerichtete Kraft gemäss Pfeil PF 3 aufgrund der Zentrierwirkung der Haltenase 8 in der Vertiefung 3c.

Die Zentrierwirkung der Haltenase 8 in der Vertiefung 3c bewirkt auch eine genaue Positionierung in Umfangsrichtung getreu der geforderten Winkelteilung des Rotormagazins 1.

Der Küvettenflansch 3b, sowie die plane Küvettenlängsseite 3a liegen somit satt am Küvettenauflagetisch 4, bzw. an den planen peripheren Facetten 2a des Rotormagazins 1 an.

Die Küvetten können durch eine einfache radiale Bewegung ohne Hebung, Absenkung oder Drehung auf das Rotormagazin aufgesetzt und von diesem entnommen werden. Das Aufsetzen und Entnehmen erfolgt mit einer Einrichtung, deren Einzelheiten aus der EP-A-564 906 mit der Bezeichnung "Bearbeitungsstation für eine Analysenvorrichtung" hervorgehen.

## Patentansprüche

1. Transporteinrichtung in einer Analysenvorrichtung zum Transport von Probenküvetten (3) zu mehreren Bearbeitungsstationen, mit einem tellerförmigen, horizontal angeordneten Rotor (1) mit einer senkrechten Aussenfläche (2a), federnden Halteelementen (7), welche bei einer radial gerichteten Bewegung die Küvetten freigeben derart, dass die Küvetten mit einer geradelinigen, horizontalen Bewegung abgenommen und aufgesetzt werden können, gekennzeichnet dadurch, dass die Küvetten (3) aus einem Probenbehälter und einem an die Behälteröffnung anschliessenden Flansch (3b) bestehen, dass eine Vielzahl von Küvettenplätzen entlang der senkrechten Aussenfläche (2a) des Rotors vorhanden sind, und dass die federnden Halteelementen (7) die Flansche (3b) der Küvetten am Rotor (1) festhalten.

2. Transportvorrichtung nach Anspruch 1, dadurch gekennzeichnet, dass die Halteelemente (7) elastische Zungen sind, die mit ihrem radial inneren Ende am Rotormagazin befestigt sind und mit ihrem radial äusseren Ende auf den Flanschen (3b) der Küvetten aufliegen.

## Claims

1. A conveyor in an analytical device for conveying cuvettes (3) to a number of processing stations and comprising a plate-shaped, horizontally arranged rotor (1) with a perpendicular outer surface (2a), resilient retaining elements (7), which with a radially directed motion can free the cuvettes such that the cuvettes can be removed and replaced with a linear, horizontal motion, characterized in that the cuvettes (3) comprise a container and a flange (3b) surrounding the mouth of the container, that a number of cuvette sites are present along the perpendicular outer surface (2a) and that the resilient retaining elements (7) secure the flanges (3b) of the cuvettes to the rotor (1).

2. A conveyor according to claim 1, characterized in that the retaining elements (7) are resilient tongues, secured by their radial inner ends to the rotor magazine and having their radial outer ends resting on the flanges (3b) of the cuvettes.

## Revendications

1. Dispositif transporteur dans un appareil d'analyses pour transporter des éprouvettes à échantillons (3) dans plusieurs postes de traitement, comportant un rotor (1) en forme de plateau, disposé horizontalement et pourvu d'une surface extérieure verticale (2a), des éléments élastiques de retenue (7) qui, lors d'un mouvement orienté radialement, libèrent les éprouvettes de telle sorte que ces éprouvettes puissent être enlevées avec un mouvement horizontal rectiligne et puissent être déposées, caractérisé en ce que les éprouvettes (3) se composent d'un récipient d'échantillon et d'un rebord (3b) bordant l'orifice du récipient, en ce qu'un grand nombre d'emplacements pour éprouvettes sont prévus le long de la surface extérieure horizontale (2a) du rotor et en ce que les éléments élastiques de retenue (7) maintiennent les rebords (3b) des éprouvettes sur le rotor (1).

2. Dispositif transporteur selon la revendication 1, caractérisé en ce que les éléments de retenue (7) sont des pattes élastiques qui sont fixées par leur extrémité radialement intérieure sur le magasin du rotor et qui s'appuient par leur extrémité radialement extérieure contre les rebords (3b) des éprouvettes.
